Europäisches Patentamt

European Patent Office

Office européen des brevets

(11) Veröffentlichungsnummer: **0 326 625**
**A1**

## (12) EUROPÄISCHE PATENTANMELDUNG

(21) Anmeldenummer: **88101381.7**

(22) Anmeldetag: **01.02.88**

(51) Int. Cl.⁴: **G05B 19/18**

(43) Veröffentlichungstag der Anmeldung:
**09.08.89 Patentblatt 89/32**

(84) Benannte Vertragsstaaten:
**AT CH DE FR GB IT LI**

(71) Anmelder: **Starrfräsmaschinen AG**
**Seebleichestrasse 61**
**CH-9400 Rorschacherberg(CH)**

(72) Erfinder: **Yeaton, Robert L.**
**44 Village Post Road**
**Danvers MA 01923(US)**
Erfinder: **Scherrer, Helmut**
**Flurgasse 48**
**A-6805 Feldkirch(AT)**

(74) Vertreter: **EGLI-EUROPEAN PATENT**
**ATTORNEYS**
**Horneggstrasse 4**
**CH-8008 Zürich(CH)**

(54) Verfahren zum Erfassen von Unregelmässigkeiten bei einer Maschine zur spanabhebenden Bearbeitung von Werkstücken.

(57) Das Verfahren dient dem Erfassen von Unregelmässigkeiten bei einer Maschine zur spanabhebenden Bearbeitung von Werkstücken mittels Werkzeugen. Die Unregelmässigkeiten können von der Maschine selbst, wie eine thermische Verlagerung, und/oder vom Werkzeug herrühren, wie dessen Verschleiss, Profil- oder Einspannfehler. Sie werden von einem Taster erfühlt. Dabei soll mit dem Werkzeug nach der Bearbeitung des Werkstückes ein Testblock bearbeitet und diese bearbeitete Fläche dann mit dem Taster abge tastet werden, dessen Koordinaten erfasst und mit Soll-Werten verglichen werden. Der Testblock spiegelt dann alle Fehler wider, gleichgültig,ob sie von der Maschine oder vom Werkzeug herrühren . Durch dieses Verfahren wird die Genauigkeit der Werkstückherstellung verbessert und die Automatisierung erhöht.

Fig.1

Xerox Copy Centre

EP 0 326 625 A1

# Verfahren zum Erfassen von Unregelmässigkeiten bei einer Maschine zur spanabhebenden Bearbeitung von Werkstücken

Die Erfindung betrifft ein Verfahren zum Erfassen von Unregelmässigkeiten bei einer Maschine zur spanabhebenden Bearbeitung von Werkstücken mittels mindestens einem Werkzeug durch mindestens einen Taster, wobei die Unregelmässigkeiten auf die Maschine selbst, wie eine thermische Verlagerung, und/oder auf das Werkzeug, wie dessen Verschleiss, Profil - oder Einspannfehler, zurückzuführen sind, sowie eine Vorrichtung hierfür.

Spanabhebende Maschinen, insbesondere Werkzeugmaschinen, unterliegen in sehr hohem Masse mechanischen und thermischen Beanspruchungen. Die thermischen Beanspruchungen führen dazu, dass es bei der Maschine selbst häufig zu Verspannungen oder Verlagerungen kommt. Die mechanischen Beanspruchungen wirken sich insbesondere auf das Bearbeitungswerkzeug aus. Hinzu treten Profilfehler selbst, welche beim Werkzeug von Anfang an vorhanden waren oder aber Einspannfehler durch das Bedienungspersonal. All. diese Fehler führen dazu, dass die Bearbeitung der Werkstücke nicht mit der hohen Genauigkeit durchgeführt werden kann, welche erforderlich ist. Ausserdem führen sie zu erhöhtem Ausschuss an nicht verwendbaren Werkstücken und zu unrentablen Umrüstzeiten. Ebenfalls wird die notwendige stetige Automatisierung von Werkzeugmaschinen behindert.

Bislang sind lediglich Verfahren und Vorrichtungen bekannt, welche sich mit der Überwachung des Profils bzw. des Verschleisses am Werkzeug selbst befassen. Hierzu wird einmal in der US-PS 4 176 396 und in der DE-OS 27 47 487 vorgeschlagen, dass die Werkzeugschneide bzw. das Werkzeugprofil selbst mit Hilfe von fotoelektrischen Fühlern bzw. Sensoren abgetastet wird. Weiterhin ist aus dem " VDI International Magazine, 3/82 Seite 13 " bekannt, dass das Werkstück selbst ausgemessen und der dort erzeugte Werkzeugfehler berechnet wird. Die erste Methode der Direktmessung am Werkzeug hat den Nachteil, dass bei komplizierten Werkzeugprofilen mit räumlich gekrümmtem Schneidenverlauf eine Messung kaum durchführbar ist. Die Messung am Werkstück selbst hat wiederum den Nachteil, dass die Messungen erst nach der Werkstückbearbeitung vorgenommen werden können, so dass der sich als nachteilig auswirkende Ausschuss bereits enstanden ist, und dass Profilfehler nicht eindeutig von Verlagerungen und sonstigen Fehlern getrennt werden können. Weiterhin sind komplexe Werkstückformen messtechnisch schwierig beherrschbar. Zudem muss in vielen Fällen entweder das Werkzeug oder das Werkstück aus der Arbeitsposition entfernt und nach der Messung wieder zurückgebracht werden. Dies ist einmal sehr kostspielig und birgt weitere Fehler im laufenden Prozess.

Der Erfinder hat sich zum Ziel gesetzt , ein Verfahren und eine Vorrichtung der o.g. Art zu entwickeln, welche sowohl Unregelmässigkeiten der Maschine selbst als auch am Werkzeug genauestens erfasst,ohne den weiteren Arbeitsablauf zu stören. Weiterhin soll die Genauigkeit der hergestellten Werkstücke verbessert und der Automatisierungsgrad der Werkzeugmaschinen erhöht werden.

Zur Lösung dieser Aufgabe führt ein Verfahren der o.g. Art, bei dem mit dem Werkzeug bei der Bearbeitung des Werkstücks ein Testblock bearbeitet und diese bearbeitete Fläche dann mit dem Taster abgetastet wird, dessen Koordinaten erfasst und mit Soll-Werten verglichen werden. Handelt es sich erfindungsgemäss um eine mehrspindlige Werkzeugmaschine, so soll mit den Werkzeugen nach der Bearbeitung der Werkstücke Testblöcke bearbeitet und diese bearbeiteten Flächen dann mit den Tastern abgetastet werden, deren Koordinaten erfasst und mit Soll-Werten verglichen werden. Testblockbearbeitung und - messung können vor, zwischen oder nach den Arbeitsoperationen am Werkstück erfolgen.

Handelt es sich bei dem Testblock um einen stabförmigen Körper, der in einer Vorrichtung eingespannt ist oder aus einem grösseren Teil herausgearbeitet wird, so werden höchstens fünf Seiten bearbeitet werden können. Bevorzugt soll der Testblock in festem Abstand zum Werkstück manuell oder automatisch eingespannt werden. Er kann aber auch selbst aus der Werkstückpartie herausgearbeitet sein. Eine andere Möglichkeit besteht darin, dass mehrere Testblöcke aus einem gemeinsamen Grundkörper heraus bearbeitet werden.

Bei dem Taster wird ein Gerät bevorzugt, welches Schaltsignale abgibt. Es kann jedoch auch sein, dass in der Praxis ein messendes Element mit einer oder mehreren Messachsen eingesetzt wird. Gleichgültig ob Taster oder Messfühler, beide können fest eingebaut oder um ein definiertes Mass verschiebbar sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt

Fig.1 eine schematische Darstellung einer Seitenansicht einer erfindungsgemässen Maschine;

Fig.2 einen teilweise dargestellten Querschnitt aus Fig. 1 entlang Linie A - A;

Fig.3 eine vergrösserte Darstellung eines Testblocks im Aufriss während seiner Bearbeitung durch ein Werkzeug;

Fig.4 eine entsprechende Darstellung des Testblocks nach Fig. 3 im Seitenriss;

Fig.5 eine vergrösserte Darstellung eines Testblocks im Aufriss während des Vermessens durch einen Taster nach fehlerbehafteter Bearbeitung;

Fig.6 eine entsprechende Darstellung des Testblocks nach Fig. 5 im Seitenriss;

Fig.7 ein Blockschema einer einspindligen Testblockmessung;

Fig.8 ein Blockschema einer mehrspindligen Testblockmessung mit gleichen Tastkugeldurchmessern;

Fig.9 ein Blockschema einer mehrspindligen Tastblockmessung mit abgestuften Tastkugeldurchmessern;

Fig.10 eine schematische Darstellung eines Antastvorganges mit abgestuften Tastkugeldurchmessern nach Fig.9 ;

Fig.11 ein zeitliches Ablaufschema einer Messwertaufzeichnung mit abgestuften Tastkugeldurchmessern nach Fig. 9 bzw. 10 ;

Fig.12 eine diagrammatische Darstellung der Findung eines Verlagerungs- Mittelwerts bei mehrspindligen Testblockmessungen .

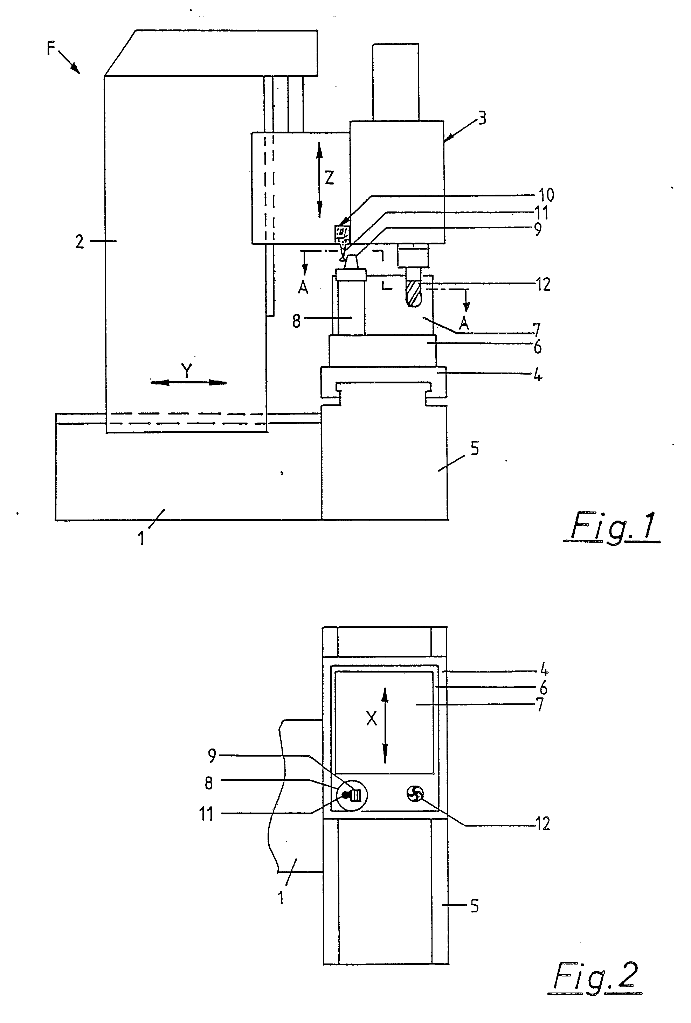

Bei einer spanabhebenden Maschine F gem.Fig. 1 sitzt einem Gestell 1 ein in Richtung Y bewegbarer Ständer 2 auf, welcher einen in Richtung Z anheb- bzw. absenkbaren Ausleger 3 trägt. Dieser Ausleger 3 übergreift einen Maschinentisch 4, welcher in Richtung X ( Fig.2) verschiebbar einer dem Gestell 1 zugeordneten Konsole 5 aufliegt.

Auf dem Maschinentisch 4 ist eine Aufnahmeeinrichtung 6 für ein Werkstück 7 aufgespannt.Neben dem Werkstück 7 befindet sich eine Testblockaufnahme 8 mit einem darin eingespannten Testblock 9.

Am Ausleger 3 ist über dem Maschinentisch 4 ein Messtastkopf 10 mit einem Taster 11 sowie ein Werkzeug 12 zur spanabhebenden Bearbeitung vorgesehen, welches sowohl das Werkstück 7 wie auch den Testblock 9 bearbeitet. Dabei richten sich die spanabhebenden Parameter des Testblocks 9 nach denen des Werkstücks 7.

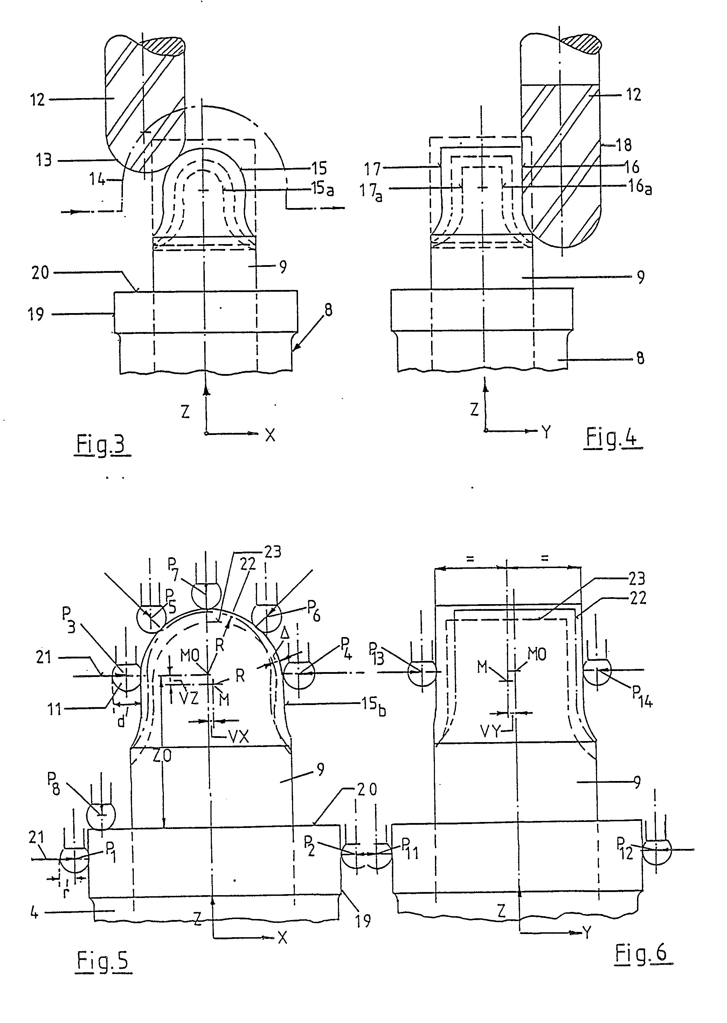

Fig. 3 und Fig. 4 zeigen ein Beispiel für eine Bearbeitung des Testblocks 9 dessen Ausgangsform nur gestrichelt angedeutet ist. Durch die Bearbeitung wird gemäss Fig.3 das eigentliche Werkzeugprofil 13 durch Überlagerung einer Halbkreisbewegung 14 auf die Fläche 15 übertragen, während die Fläche 16 und 17 in Fig. 4 den Zylindermantel 18 des Werkzeugs 12 bei dessen Verlagerung in Richtung Y widerspiegeln. Die weiteren gestrichelten Linien am Testblock 9 sollen die schrittweise Abarbeitung andeuten, bis schliesslich die Endform des Testblocks 9 mit den Flächen 15a, 16a und 17a erreicht ist.

Für die nachfolgende Messung durch den Taster 11 dienen eine Mantelfläche 19 und eine Stirnfläche 20 der Testblockaufnahme 8 als Referenzflächen.

Nach dem Bearbeiten des Testblocks 9 folgt dessen Vermessung, wie dies in Fig. 5 und Fig. 6 gezeigt ist. Hierzu dient der Taster 11, welcher im Ausführungsbeispiel als Tastkugel ausgebildet ist. Die Tastkugel 11 wird über koordinierte Vorschubbewegungen in Richtung X,Y und Z normal auf die Messflächen hinbewegt, wie dies die Pfeile 21 andeuten.Dabei sind in Fig. 5 acht und in Fig.6 vier Messpunkte P vorgesehen,bestimmt nach der jeweiligen Lage des Mittelpunktes der Tastkugel 11 beim Anschlag an dem Testblock 9 bzw. den Referenzflächen 19 und 20. Der Anschlag erfolgt dabei an der Bearbeitungslinie 15b des Testblocks 9, welche das tatsächlich übertragene Werkzeugprofil 13 bzw. dessen Zylindermantel 18 widerspiegelt. Die strichpunktierte Linie 22 stellt das Sollprofil dar, welches einen Soll - Mittelpunkt MO aufweist. Die Bearbeitungslinie 15b weicht hiervon jedoch zum Beispiel bei fehlerhafter Werkzeugeinstellung bzw. -verlagerung ab. Dem daraus resultierenden Mittelpunkt M, welcher um die Masse VX, VY und VZ versetzt zum Soll-Mittelpunkt MO angeordnet ist, wird ein verlagertes Sollprofil 23 zugeordnet, beide mit einem Radius R.

Weitere Grössen zur Lagebestimmung sind die Mittelpunktshöhe ZO des Sollprofils 22 und der Radius r bzw. der Durchmesser d der Tastkugel 11.

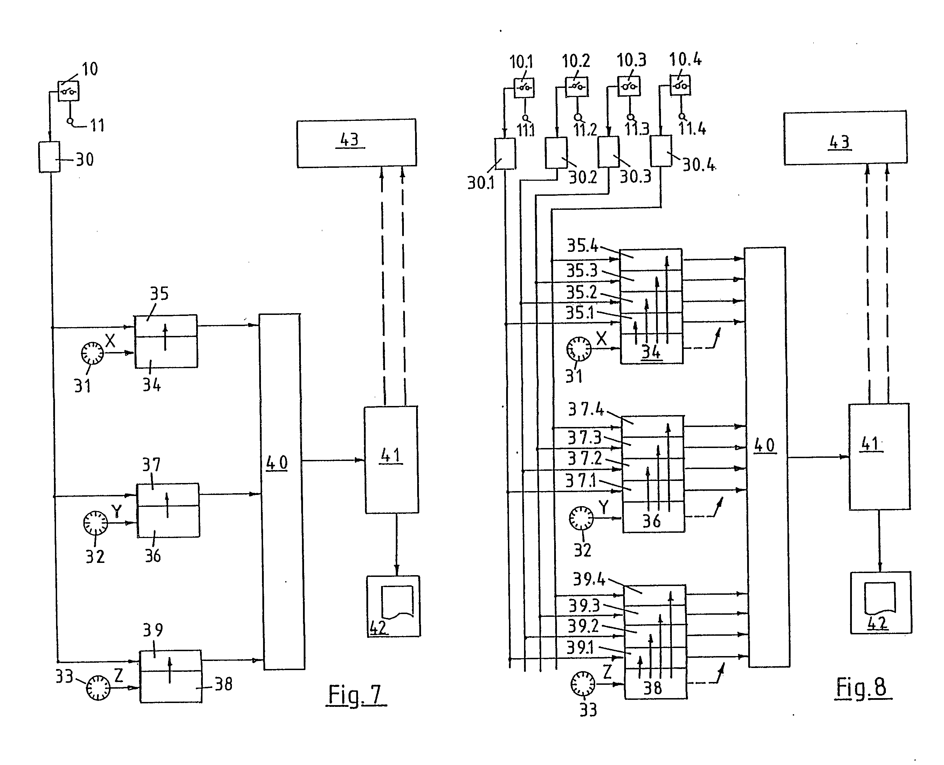

Bei jedem der vorbestimmten Messpunkte $P_1$ - $P_8$ und $P_{11}$ bis $P_{14}$, welche der Tastkugelauslenkung entsprechen, gibt der Tastkopf ein Schaltsignal ab. Nach Fig. 7 wird dieses Signal über eine Impulsformerstufe 30 an Messwertspeicher 35, 37 und 39 gesandt. Jedem dieser Messwertspeicher 35, 37 und 39 ist jeweils ein weiterer Speicher 34, 36 und 38 zugeordnet, welcher Messdaten aufnimmt, die von je einer Messeinrichtung 31, 32 und 33 an jeder der Vorschubachsen X, Y, Z kommen. Hierdurch werden die genauen Koordinaten $X_n$, $Y_n$ und $Z_n$ des Messpunktes $P_n$ bestimmt. Beim Auftreten jeden Schaltsignals werden die kumulierten Daten der Vorschubbewegungsrichtungen X, Y und Z aus den Speichern 34, 36 und 38 in die Messwertspeicher 35, 37 und 39 übernommen.Diese Daten gelangen dann aus jedem Messwertspeicher 35, 37 und 39 über eine Schnittstelle 40 in eine Messdaten - Verarbeitungseinheit ( Rechner ) 41, in der sie zu einem Messergebnis vereinigt werden. Hier erfolgt nun die Fehlerberechnung:

a) Die Koordinaten des Soll-Mittelpunktes MO des Sollprofils 22 sind :

$$X_{MO} = \frac{( X_1 + X_2 )}{2}$$

$$Y_{MO} = \frac{( Y_{11} + Y_{12} )}{2}$$

$$Z_{MO} = Z_8 - r + ZO$$

b) Die $X_M$ - und $Z_M$- Koordinaten des Mittelpunktes M des verlagerten Sollprofils 23 werden mittels Ausgleichsrechnung so bestimmt,dass die Abstände $\overline{P_n M}$ der Messpunkte $P_3$ bis $P_7$ möglichst wenig vom Durchschnittsabstand abweichen. Für die $Y_M$-Koordinate gilt

$$Y_M = \frac{( Y_{13} + Y_{14} )}{2} \; .$$

c) Die Werkzeugverlagerung entspricht dem räumlichen Abstand der Mittelpunkte MO und M bzw. deren Versetzung VX, VY und VZ zueinander.

d) Der Werkzeug - Profilfehler $\Delta$ n ergibt sich aus

$$\Delta n = \overline{P_n M} - R - r$$

Der Verschleiss des Werkzeuges 12 kann nun anhand des Verlaufs des Profilfehlers $\Delta$ über die Zeit bestimmt werden. Hierzu sind Messungen in bestimmten Zeitabständen erforderlich.

Bei handbedienten oder teilautomatisierten Werkzeugmaschinen werden die ermittelten Fehler mittels Protokolliergerät42 in Form von Listen und /oder Zeichnungen ausgedruckt. Bevorzugt werden auch vorbestimmte Toleranzen für Verlagerungen und Profilfehler in den Rechner 41 eingegeben. Bei Toleranzüberschreitung wird ein optisches oder akkustisches Warnsignal erzeugt.

Bei vollautomatischen Maschinen kann der Werkzeugwechsel selbsttätig über die Profilfehlermessung gesteuert werden.Ausserdem können die Komponenten VX, VY, VZ der Versetzung des Mittelpunktes MO bzw. der Werkzeugverlagerung durch eine Nullpunktverschiebung der entsprechenden Vorschubachsen kompensiert werden. Dazu dient eine Datenübermittlung zwischen Rechner 41 und einer Maschinensteuerung 43.

Ein derartiges Messverfahren soll bevorzugt auch bei einer mehrspindligen Maschine zum Ermitteln des Verschleisses der Werkzeuge oder ihrer Verlagerungen Anwendung finden.Ein derartiges Blockschema für eine vierspindlige Maschine ist in Fig. 8 dargestellt, wobei hier die Tastkugeln 11.1 bis 11.4 alle den gleichen Radius r aufweisen. Die Schaltsignale laufen von den jeweiligen Tastköpfen 10.1 bis 10.4 über Impulsformerstufen 30.1 bis 30.4 zu Messwertspeichern 35.1 bis 35.4, 37.1 bis 37.4 und 39.1 bis 39.4. Somit hat jede Spindel je einen Messwertspeicher für die Bewegungsrichtung X,Y und Z. Diesen jeweils vier Messwertspeichern 35.1 bis 35.4, 37.1 bis 37.4 und 39.1 bis 39.4 ist je einer der Speicher 34, 36 und 38 zugeordnet, welche die Messergebnisse aus den Messeinrichtungen für die Vorschubbewegung X,Y bzw. Z ansammeln. Nach den vorbestimmten Schaltsignalen werden diese in den jeweils empfangsbereiten Messwertspeicher eingegeben und über die gemeinsame Schnittstelle 40 dem Rechner 41 zugeführt. Auf diese Weise wird für jede Spindel getrennt eine Fehlermessung durchgeführt.

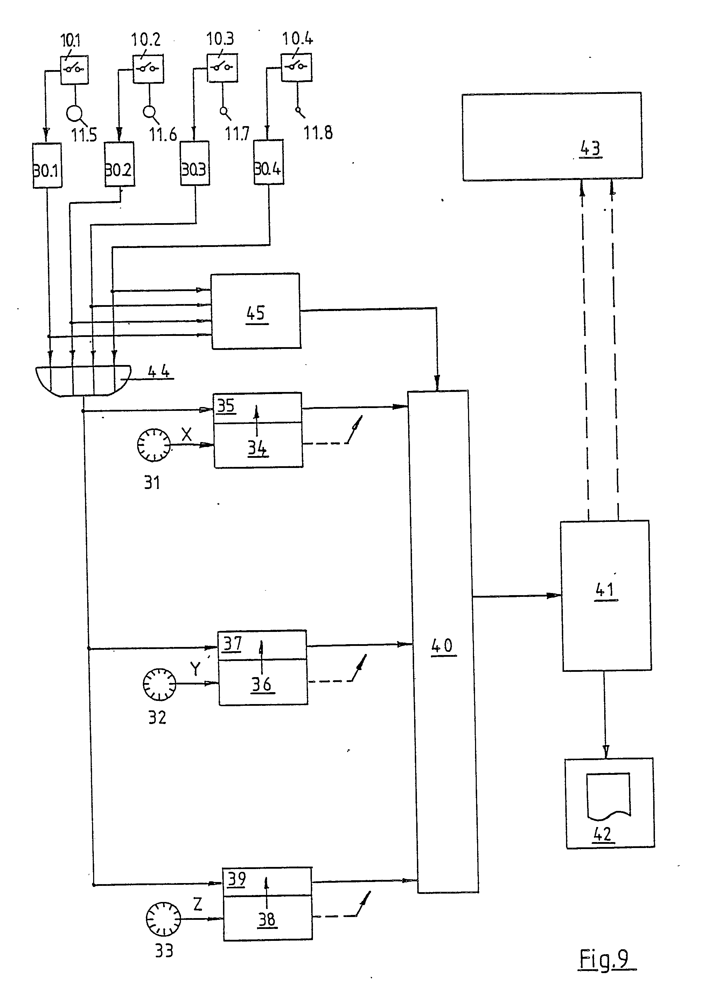

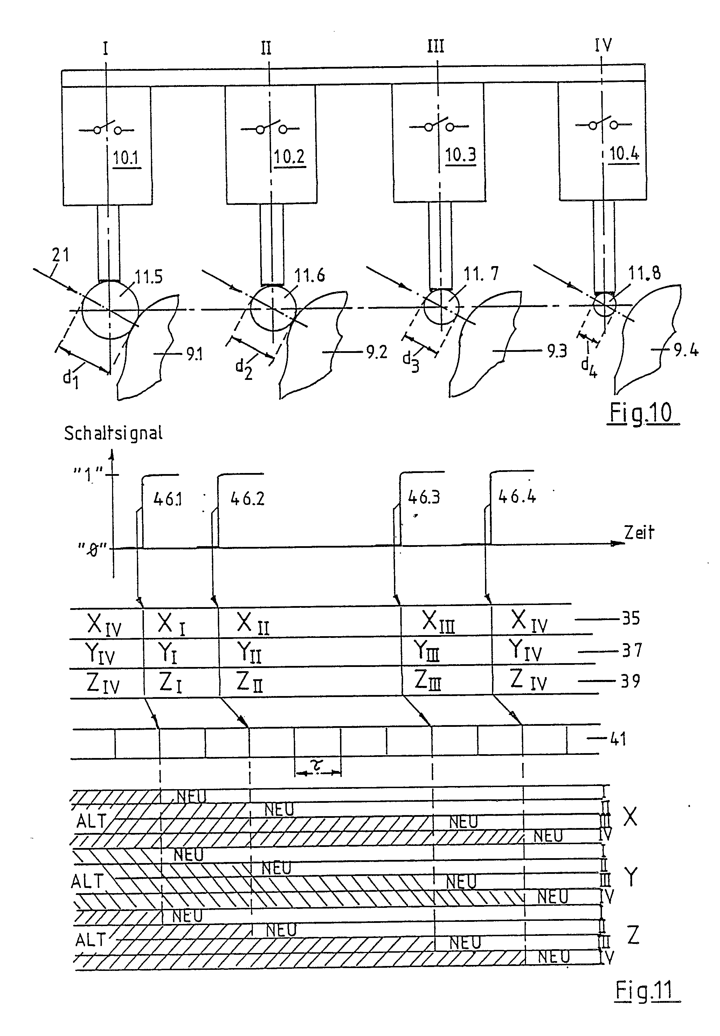

Eine andere Ausführungsform für eine Maschine mit vier Spindeln I - IV zeigen Fig.9 und 10. Hier sollen die Tastkugeln 11.5 bis 11.8 abgestufte, den jeweiligen Spindeln fest zugeordnete Durchmesser d aufweisen . Die Schaltsignale der einzelnen Tastköpfe 10.1 bis 10.4 laufen zu einer Oder-Schaltung 44 und zu einer Schaltreihenfolge- Überwachungsschaltung 45. Der weitere Aufbau entspricht dem zu Fig. 7 beschriebenen, wobei vorteilhafterweise die Anordnung von nur je einem Messwertspeicher 35, 37 und 39 für jede Bewegungsrichtung X, Y und Z genügt. In Fig. 10 ist das Verhältnis beim Antasten von mehrspindlig bearbeiteten Testblöcken 9.1 bis 9.4 dargestellt. Infolge der abgestuften Durchmesser $d_1$ bis $d_4$ der Tastkugeln 11.5 bis 11.8 werden die Testblöcke 9.1 bis 9.4 zeitlich versetzt angefahren. Deshalb erzeugen auch die Tastköpfe 10.1 bis 10.4 zeitlich versetzte Schaltsignale in vorbestimmter Reihenfolge.

Die Abstufung, $\Delta$ d der Durchmesser $d_1$ - $d_4$ der Tastkugeln 11.5 bis 11.8 ist nach der Formel, $\Delta$ d > 2 ($\tau$. v + $\Delta$ (+) + $\Delta$(-) ) zu wählen. Dabei bedeutet $\tau$ das dem Rechner vorgegebene Zyklusintervall, v die Antastgeschwindigkeit, $\Delta$ (+) das grösstmögliche Aufmass und $\Delta$ (-) das grösstmögliche Abmass des Testblockprofils 15.

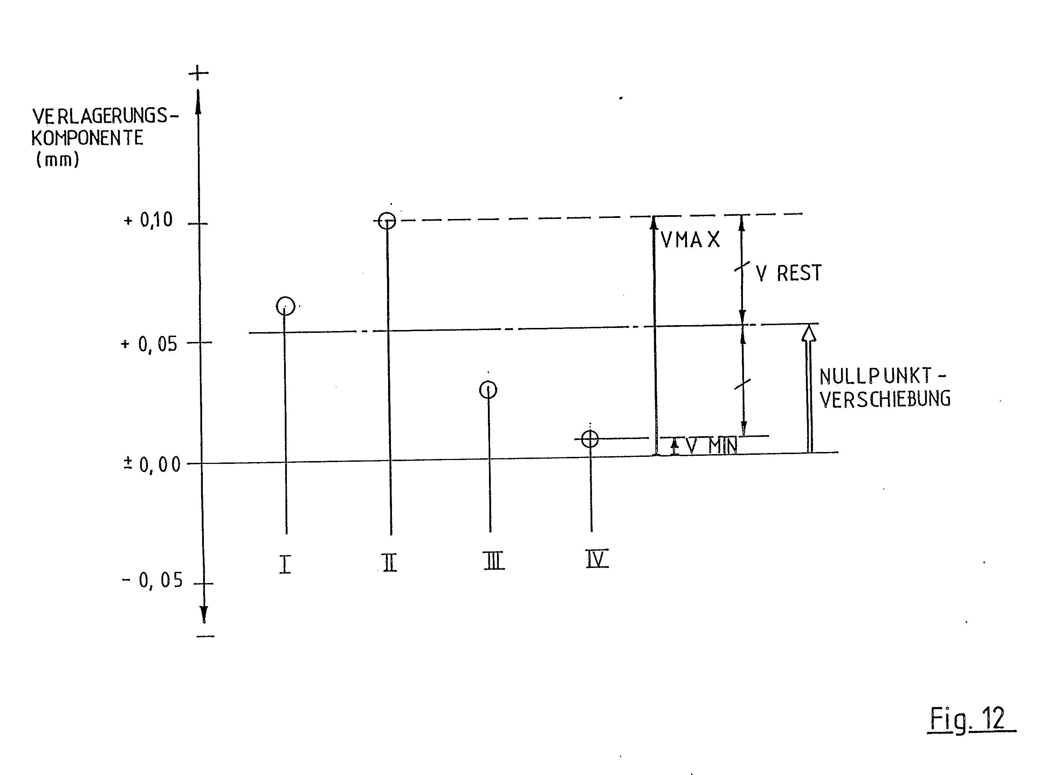

In Fig. 11 ist nun ein Ablaufschema der Antastung durch Tastkugeln 11.5 bis 11.8 mit unterschiedlichen Durchmessern $d_1$ bis $d_4$ dargestellt. Die oberste Reihe zeigt den Zeitablauf t der Signale 46.1 bis 46.4. Darunter sind die jeweiligen Inhalte der Messwertspeicher 35, 37 und 39 angegeben. Die Koordinaten der Tastkugel 11.5 sind bei Berührung mit dem Testblock 9.1 ( bei Spindel I) mit $X_I$, $Y_I$ und $Z_I$ bezeichnet; entsprechend die Koordinaten der weiteren Tastkugeln 11.6 bis 11.8 . Die Messdaten-Verarbeitungseinheit 41 übernimmt die Messdaten in einem Zeittakt, welcher durch einen Programmzyklus vorgegeben ist, und speichert sie in ihrem Datenspeicher geordnet ab. Dabei ergibt sich die Koordinatenzuordnung aus der Herkunft der Daten : X - Werte kommen vom Messwertspeicher 35, Y - Werte von 37, Z - Werte von 39. Die Zuordnung zu den Spindeln I - IV ergibt sich dagegen aus der Schaltsignal - Reihenfolge 46.1 bis 46.4. Für jeden Messzyklus werden im übrigen die Testblock - Sollflächen um einen bestimmten Betrag zugestellt bzw. der Testblock 9 wird ausgewechselt.

Bei mehrspindligen Maschinen, bei welchen, wie in Fig.10 , die Spindeln I - IV auf einem gemeinsamen Träger 47 fest angebracht sind, wird nach Figur 12 der Mittelwert der Verlagerungskomponente ( VMAX - VMIN ) /2 errechnet und zur Nullpunktverschiebung benützt. Statt dem ursprünglichen Fehler VMAX verbleibt nach der Kompensation der Restfehler VREST.

Verfügt die mehrspindlige Werkzeugmaschine über Verstelleinrichtungen, die auf die einzelnen Spindeln I - IV wirken ( z.B. numerisch gesteuerte Pinolenverstellungen), so können die in der Verstellrichtung liegenden Verlagerungskomponenten für jede Spindel I - IV einzeln kompensiert werden.


Positionszahlenliste


1 = Gestell
2 = Ständer
3 = Ausleger
4 = Maschinentisch
5 = Konsole
6 = Aufnahmeeinrichtung
7 = Werkstück
8 = Testblockaufnahme
9 = Testblock
10 = Messtastkopf
11 = Taster
12 = Werkzeug
13 = Werkzeugprofil
14 = Halbkreisbewegung
15 = Fläche

16 =⎫ Fläche
17 =⎭

18 = Zylindermantel

19 = Mantelfläche⎫
                    ⎬ von 8 (Referenzflächen)
20 = Stirnfläche ⎭

21 = Pfeile
22 = Sollprofil

5

23 = verlagertes Sollprofil
30 = Impulsformerstufe

$$\left.\begin{array}{l} 31 = \\ 32 = \\ 33 = \end{array}\right\} \text{Messeinrichtungen für X,Y, und Z}$$

34 = Speicher für X
35 = Messwertspeicher
36 = Speicher für Y
37 = Messwertspeicher
38 = Speicher für Z
39 = Messwertspeicher
40 = Schnittstelle
41 = Messdaten-Verarbeitungseinheit
42 = Protokolliergerät
43 = Maschinensteuerung
44 = ODER-Schaltung
45 = Schaltreihenfolge-Überwachungsschaltung
46 = Signale
47 = Träger
d = Durchmesser von 11
M = Mittelpunkt
MO = Sollmittelpunkt
$\Delta n$ = Werkzeugprofilfehler
$P_n$ = Messpunkte
P = Werkzeugmaschine
R = Radius
r = Radius der Tastkugel
t = Zeitablauf

$$\left.\begin{array}{l} X = \\ Y = \\ Z = \end{array}\right\} \text{Bewegungsrichtungen}$$

$X_{MO}, Y_{MO}, Z_{MO}$ = Koordinaten v. MO
$X_M, Y_M, Z_M$ = Koordinaten v. M

$$\left.\begin{array}{l} VX = \\ VY = \\ VZ = \end{array}\right\} \begin{array}{l}\text{Versetzung des Mittel-} \\ \text{punktes zum Soll-} \\ \text{mittelpunkt}\end{array}$$

ZO = Mittelpunkthöhe von 22

## Ansprüche

1. Verfahren zum Erfassen von Unregelmässigkeiten bei einer Maschine zur spanabhebenden Bearbeitung von Werkstücken mittels mindestens einem Werkzeug durch mindestens einen Taster, wobei die Unregelmässigkeiten auf die Maschine selbst, wie eine thermische Verlagerung, und/oder auf das Werkzeug, wie dessen Verschleiss, Profil- oder Einspannfehler, zurückzuführen sind,
dadurch gekennzeichnet,
dass mit dem /den Werkzeug/en (12) bei der Bearbeitung des/der Werkstücke/s (7) ein Testblock/Testblöcke (9) bearbeitet und diese bearbeitete/en Fläche/en (15) dann mit dem /den Taster/n (11) abgetastet wird/werden, dessen/deren Koordinaten $(X_n, Y_n, Z_n)$ erfasst und mit Soll-Werten verglichen werden.

2. Verfahren nach Anspruch 1, dadurch gekennzeichnet, dass zusätzlich zum Testblock (9) auch Referenzflächen ( 19,20 ) oder -körper abgetastet werden.

3. Verfahren nach Anspruch 2, dadurch gekennzeichnet, dass als Referenzflächen die Stirn- und Mantelflächen ( 19,20 ) einer Testblockaufnahme (8) abgetastet werden.

4. Verfahren nach einem der Ansprüche 1 - 3, dadurch gekennzeichnet, dass die Koordinaten $(X_n, Y_n, Z_n)$ von Messeinrichtungen ( 31,32,33 ) erfasst und in Speichern ( 34,36,38 ) kumuliert werden.

5. Verfahren nach Anspruch 4, dadurch gekennzeichnet, dass von dem Taster (11) oder einem ihm zugeordneten Tastkopf (10) beim Anschlag an dem Testblock (9) oder den Referenzflächen ( 19,20 ) ein Schaltsignal an einen Messwertspeicher ( 35,37,39 ) zur Aufnahme der im Speicher ( 34, 36,38 ) vorhandenen Koordinatendaten abgegeben wird.

6. Verfahren nach Anspruch 5, dadurch gekennzeichnet, dass bei einer Maschine mit mehreren Werkzeugen (12), mehreren Tastern (11) und mehreren Testblöcken (9) von jedem Taster ( 11.1 bis 11.4 ) bzw. seinem Tastkopf ( 10.1 bis 10.4 ) Schaltsignale für je einen Messwertspeicher ( 35.1 bis 35.4, 37.1 bis 37.4, 39.1 bis 39.4 ) zur Aufnahme der entsprechenden Koordinaten ( $X_n, Y_n, Z_n$) aus einem Speicher ( 34,36,38 ) abgegeben werden, wobei die Testblöcke ( 9.1 - 9.4 ) zeitlich parallel abgetastet werden und die entsprechende Zuordnung eine Messdatenverarbeitungseinheit (41) vornimmt.

7. Verfahren nach Anspruch 5, dadurch gekennzeichnet, dass bei einer Maschine mit mehreren Werkzeugen (12), mehreren Tastern (11) und mehreren Testblöcken (9) von jedem Taster ( 11.5 - 11.8 ) bzw. dem ihm zugeordneten Tastkopf ( 10.1 - 10.4 ) Schaltsignale für einen Messwertspeicher ( 35,37,39 ) zur Aufnahme der entsprechenden Koordinaten ( $X_n, Y_n, Z_n$ ) aus einem Speicher ( 34,36,38 ) abgegeben werden, wobei jedoch die Messwerte der Koordinaten ( $X_n, Y_n, Z_n$ ) infolge abgestufter Durchmesser ( $d_1 - d_4$ ) der Taster ( 11.5 bis 11.8 ) zeitlich hintereinander aufgenommen werden.

8. Verfahren nach Anspruch 5, dadurch gekennzeichnet, dass bei einer Maschine mit mehreren Werkzeugen (12), mehreren Tastern (11) und mehreren Testblöcken (9) von jedem Taster ( 11.1 - 11.8 ) bzw. seinem Tastkopf ( 10.1 - 10.4 ) Schaltsignale für einen Messwertspeicher ( 35,37,39 ) zur Aufnahme der entsprechenden Koordinaten ( $X_n, Y_n, Z_n$ ) aus einem Speicher ( 34,36,38 ) abgegeben werden, wobei der Messzyklus so oft wiederholt wird, als Testblöcke vorhanden sind.

9. Verfahren nach einem der Ansprüche 1 - 8, dadurch gekennzeichnet, dass die Daten aus den jeweiligen Messwertspeichern ( 35,37,39 ) in einer Messdaten-Verarbeitungseinheit (41) vereinigt und zu Messergebnissen verarbeitet werden.

10. Verfahren nach Anspruch 9, dadurch gekennzeichnet, dass die Messergebnisse in einem Protokolliergerät (42) aufgelistet bzw. aufgezeichnet werden.

11. Verfahren nach Anspruch 9 oder 10, dadurch gekennzeichnet, dass bei Überschreitung einer bestimmten Toleranz zwischen den eingegebenen Koordinaten ( $X_n, Y_n, Z_n$ ) und den Soll-Werten eine Maschinensteuerung (43) angesteuert oder ein Werkzeugwechsel durchgeführt wird.

12. Verfahren nach Anspruch 11, dadurch gekennzeichnet, dass eine Nullpunkt-Verschiebung der Maschinenkoordinaten auf einen Mittelwert zwischen einer maximalen und einer minimalen Verlagerungskomponente vorgenommen wird.

13. Maschine zum spanabhebenden Bearbeiten von mindestens einem Werkstück mittels mindestens einem Werkzeug, dessen Unregelmässigkeiten, wie Verschleiss, Profil- oder Einspannfehler, und/oder solche der Maschine, wie thermische Verlagerungen, mittels Taster erfassbar sind, dadurch gekennzeichnet, dass dem/den Tastern (11) ein Testblock /Testblöcke (9) zugeordnet ist/sind , der/die nach Bearbeitung mit dem/den Werkzeug/en (12) eine Oberfläche (15) aufweist/sen, welche die Unregelmässigkeit widerspiegelt/ln, sowie Messeinrichtungen ( 31,32,33 ) zur Aufnahme von Koordinaten ( $X_n, Y_n, Z_n$ ) des/der Taster/s (11 ) vorgesehen sind.

14. Maschine nach Anspruch 13, dadurch gekennzeichnet, dass Testblock (9) und Werkstück (7) auf einem Maschinentisch (4) angeordnet sind, welcher in Richtung (X) gleitet, und von einem Ausleger (3) als Träger für Taster (11) und Werkzeug (12) übergriffen ist, welcher in Richtung (Z) an einem Ständer (2) bewegbar festgelegt ist,der wiederum in Richtung (Y) verschiebbar ist.

15. Maschine nach Anspruch 13 oder 14, dadurch gekennzeichnet, dass den Messeinrichtungen ( 31,32,33 ) jeweils ein Speicher ( 34,36,38 ) zur Aufnahme der Koordinaten ($X_n, Y_n, Z_n$ ) zugeordnet ist.

16. Maschine nach Anspruch 15, dadurch gekennzeichnet, dass dem Taster (11) bzw. einem mit ihm verbundenen Tastkopf (10) Messwertspeicher ( 35,37,39 ) zur Übernahme der Koordinatenwerte ( $X_n, Y_n, Z_n$ ) aus den Speichern ( 34,36,38 ) aufgrund eines Schaltsignals von dem Taster (11) bzw. dem Tastkopf (10 ) nachgeschaltet sind.

17. Maschine nach Anspruch 16, dadurch gekennzeichnet, dass bei mehreren Tastern ( 11.1 - 11.4 ) jedem Taster ( 11.1 - 11.4 ) für jede Koordinate ( $X_n$ bzw. $Y_n$ bzw. $Z_n$ ) ein eigener Messwertspeicher ( 35.1- 35.4, 37.1 - 37.4, 39.1 - 39.4 ) zugeordnet ist, die entsprechende Zuordnung aber eine Messdaten-Verarbeitungseinheit (41 ) ausführt.

18. Maschine nach Anspruch 16, dadurch gekennzeichnet, dass die Taster ( 11.5 - 11.8 ) unterschiedliche Masse ( $d_1$ - $d_4$ ) aufweisen, ihnen jedoch ein gemeinsamer Messwertspeicher ( 35,37,39 ) für jede Koordinate ($X_n$ bzw.$Y_n$ bzw. $Z_n$ ) zugeordnet ist.

19. Maschine nach einem der Ansprüche 16 - 18, dadurch gekennzeichnet, dass zwischen den Tastern (11.5 - 11.8) und den Speichern (35,37,39) eine ODER - Schaltung eingebaut ist.

20. Maschine nach Anspruch 19, dadurch gekennzeichnet, dass vor der ODER-Schaltung eine Schaltreihenfolge-Überwachungsschaltung (45) mit einer die Messwertspeicher ( 35,37,39 ) verbindenden Schnittstelle (40) gekoppelt angeordnet ist.

21. Maschine nach einem der Ansprüche 16 bis 20, dadurch gekennzeichnet, dass den Messwertspeichern ( 35,37, 39 ) ein Messdaten-Verarbeitungsgerät (41) nachgeschaltet ist, an welches ein Protokolliergerät (42) und/oder eine Maschinensteuerung (43) anschliesst.

Fig.1

Fig.2

Fig.3

Fig.4

Fig.5

Fig.6

Fig.8

Fig.7

Fig.9

Fig.10

Fig.11

VERLAGERUNGS-
KOMPONENTE
(mm)

+

+ 0,10

VMAX

V REST

+ 0,05

NULLPUNKT-
VERSCHIEBUNG

± 0,00

V MIN

I    II    III    IV

- 0,05

−

EP 0 326 625 A1

Fig. 12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 554 495 (R.K. DAVIS)<br>* Zusammenfassung; Spalte 3, Zeile 44 - Spalte 4, Zeile 9; Figuren 1,2 *<br>--- | 1,13 | G 05 B 19/18 |
| Y | DE-A-3 132 921 (HEYLIGENSTAEDT & CO.)<br>* Insgesamt *<br>--- | 1,13 | |
| Y | DE-A-3 234 241 (RENISHAW ELECTRICAL LTD)<br>* Insgesamt *<br>--- | 1,13 | |
| A | GB-A-1 358 913 (MASCHINENFABRIK HEID AG)<br>* Insgesamt *<br>--- | 1-21 | |
| A | DE-A-2 723 544 (HEYLIGENSTAEDT & CO.)<br>* Insgesamt *<br>----- | 1-21 | |

**RECHERCHIERTE SACHGEBIETE (Int. Cl.4)**

G 05 B

Der vorliegende Recherchenbericht wurde für alle Patentansprüche erstellt

| Recherchenort | Abschlußdatum der Recherche | Prüfer |
|---|---|---|
| DEN HAAG | 03-10-1988 | RESSENAAR J.P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................................
& : Mitglied der gleichen Patentfamilie, übereinstimmendes Dokument

EPO FORM 1503 03.82 (P0403)